# EUROPÄISCHE PATENTSCHRIFT

(11) **EP 2 268 904 B1**
(45) Veröffentlichungstag und Bekanntmachung des Hinweises auf die Patenterteilung: **09.11.2011**
(21) Anmeldenummer: 09733341.3
(22) Anmeldetag: 04.02.2009
(51) Int. Cl.: F01N 3/20, B01D 53/90, B01F 5/02

(54) **VORRICHTUNG ZUR ZUFÜHRUNG EINES REAGENS IN EIN ABGASROHR EINER ABGASANLAGE EINES KRAFTFAHRZEUGS**
DEVICE FOR SUPPLYING A REAGENT INTO AN EXHAUST PIPE OF AN EXHAUST SYSTEM OF A MOTOR VEHICLE
DISPOSITIF D´AMENÉE D´UN RÉACTIF DANS UN TUYAU D´ÉCHAPPEMENT D´UN SYSTÈME D´ ÉCHAPPEMENT D´UN VÉHICULE AUTOMOBILE

(30) Priorität: 16.04.2008 DE 102008001212
(43) Veröffentlichungstag der Anmeldung: 05.01.2011
(73) Patentinhaber: Robert Bosch GmbH, 70442 Stuttgart (DE)
(72) Erfinder: LISKOW, Uwe, 71679 Asperg (DE)
(86) Internationale Anmeldenummer: PCT/EP2009/051223
(87) Internationale Veröffentlichungsnummer: WO 2009/127449

(56) Entgegenhaltungen:
- EP-A- 1 748 162
- EP-A- 1 890 016
- WO-A-2008/034982
- DE-A1-102005 063 081
- FR-A- 2 906 300
- JP-A- 2007 321 647
- US-A1- 2006 016 176

## Beschreibung

Die Erfindung betrifft eine Vorrichtung zur Zuführung eines Reagens in ein Abgasrohr einer Abgasanlage eines Kraftfahrzeugs, mit einer Zuführstelle/Einspritzstelle.

### Stand der Technik

Im Zuge der Abgasbehandlung in Kraftfahrzeugen werden zunehmend Reagenzien eingesetzt, die in bestimmte Abschnitte der Abgasanlage eingebracht, beispielsweise zugeführt oder eingespritzt werden. Beispielsweise bei DNOX-Katalysatoren, die als Selektivkatalysatoren ausgebildet sind, wird zum Ablauf der selektiv-katalytischen Reaktion (SCR) Harnstoff beispielsweise als Harnstoffwasserlösung zugeführt. Hierzu sind im Stand der Technik Zuführstellen/Einspritzstellen vorgesehen, die das Reagens in ein Abgasrohr der Abgasanlage einbringen, beispielsweise einspritzen. Die eingespritzten Reagenzien, insbesondere Harnstoffwasserlösung, wird hierbei meist nicht vollständig von der Abgasströmung abtransportiert, sondern bildet Ablagerungen, beispielsweise durch Ausbildung großer Tropfen, an der der Einspritzstelle gegenüberliegenden Innenwand des Abgasrohrs. Beim Reduktionsmittel Harnstoffwasserlösung in 32,5-prozentiger Konzentration beispielsweise bilden sich beim Verdampfen Harnstoffkristalle. Der so auskristallisierte Harnstoff steht einerseits nicht mehr für die SCR-Reaktion zur Verfügung, da er bereits im Bereich der Einspritzstelle hängen bleibt. Weiter ist in ungünstigen Fällen beobachtet worden, dass die Ablagerungen das Abgasrohr chemisch angreifen oder sich zu querschnittsverengenden, größeren Belägen anhäufen. Bei höheren Temperaturen werden derartige Ablagerungen zu Harnstofffolgeprodukten (etwa Biuret, Triuret, Cyanursäure und so weiter) umgesetzt, die teilweise nicht mehr löslich sind, insbesondere da auch das zur Lösung benötigte Wasser im Abgasrohr fehlt. Bei sehr hohen Abgastemperaturen werden diese zwar wieder verdampft, wobei aber die Abgasrohrwandung im Regelfall nicht die zur Verdampfung benötigte hohe Temperatur von zwischen 190°C und 430°C erreicht (zur Rückreaktion oder Zersetzung ist etwa erforderlich bei Biuret eine Temperatur von 190°C bis 200°C, bei Cyanursäure 300°C bis 350°C und bei Ammeline 380°C bis 430°C, während Melamine zwischen 280°C und 430°C zersetzt werden.

Aus der DE 10 2005 063 081 ist es bekannt, im Abgastrakt im Bereich eines Moduls zum Dosieren eines Reduktionsmittelsvorläufers einen Oberflächenverdampfer anzuordnen.

Aufgabe der Erfindung ist es, eine Zuführung/Einspritzung von Reagens in ein Abgasrohr einer Abgasanlage eines Kraftfahrzeugs bereitzustellen, die die genannten Nachteile vermeidet und eine sichere, störunanfällige Einbringung des Reagens ermöglicht, ohne selbst geregelt oder gesteuert werden zu müssen. Insbesondere ist ein eine störunanfällige Ausführung erwünscht.

### Offenbarung der Erfindung

Hierzu wird eine Vorrichtung zur Zuführung eines Reagens in ein Abgasrohr einer Abgasanlage eines Kraftfahrzeugs vorgeschlagen, mit einer Zuführstelle/Einspritzstelle. Hierbei ist ein der Zuführstelle/Einspritzstelle im Abgasrohr beabstandet gegenüberliegendes Fangmedium vorgesehen. Durch das Fangmedium wird verhindert, dass das Reagens, beispielsweise eine Harnstoffwasserlösung, auf die der Zuführstelle/Einspritzstelle gegenüberliegende Wandung des Abgasrohrs auftrifft und dort, ohne von der Strömung mitgerissen zu werden, Tropfen bildet oder sofort verdampft und Niederschläge hinterlässt. Dabei ist das Fangmedium ein Gestrick. Ein Gestrick ist hierbei jede Form von durchlässig ausgebildeter Substanz, wobei bevorzugt faden- oder faserförmige Substanz verwendet wird und wobei zwischen den einzelnen Fasern oder Fäden ein Luftraum verbleibt.

Bevorzugt ist vorgesehen, dass das Fangmedium strömungsdurchlässig ist. Durch die strömungsdurchlässige Ausbildung wird erreicht, dass das Reagens zwar von der gegenüberliegenden Wandung des Abgasrohrs abgehalten wird, aber aus dem Fangmedium heraustransportiert wird, wenn dieses vom Abgas durchströmt wird. Insbesondere kann so erreicht werden, dass das Fangmedium, beispielsweise durch allseitig vom Abgasrohr inwändig beabstandete Anordnung, so hohe Temperaturen erreicht, dass auch Rückreaktionen von Ablagerungen der eingangs genannten Art (Biuret, Triuret, Cyanursäure et cetera) möglich sind.

Bevorzugt ist das Gestrick aus hochtemperaturfestem Material gebildet oder weist ein solches auf. Hierdurch ist gewährleistet, dass das Gestrick nicht durch hohe Abgastemperaturen beeinträchtigt wird, insbesondere ist sichergestellt, dass es nicht zu unerwünschten thermischen Strukturveränderungen und damit zu möglichen Funktionsbeeinträchtigungen kommt.

Bevorzugt ist das Material ein Metall und/oder eine Kohlefaser und/oder eine Keramikfaser oder weist solche auf. Derartige Materialien sind im Stand der Technik geläufig und günstig großindustriell herstellbar, so dass das Gestrick kostengünstig zur Verfügung gestellt werden kann.

In einer bevorzugten Ausführung ist das Gestrick zumindest abschnittsweise in einem Rahmen angeordnet oder ausgebildet. Hierdurch wird erreicht, dass das Gestrick auf bei langem Einsatz und Gebrauch keine unerwünschten Geometrieverformungen ausbildet, die in ungünstigen Fällen seine Wirksamkeit oder die Abgasströmung beeinträchtigen könnten.

In einer Ausführungsform ist das Gestrick im Wesentlichen flächig ausgebildet. In einer anderen Ausführungsform ist das Gestrick zumindest abschnittsweise muldenförmig ausgebildet. Durch solche verschiedenartigen Ausbildungen lässt sich das Gestrick dem Abgasrohr, in dem es eingebracht werden soll, in möglichst günstiger Weise anpassen, wobei stets berücksichtigt wird, in welcher Art das Reagens zugeführt oder eingespritzt wird, und wie die Lage des Gestricks zur Strömungsrichtung ist. Insbesondere wird die Durchströmung des Gestricks in möglichst günstiger Weise angestrebt, damit auftreffendes Reagens vollständig von dem Abgasstrom mitgerissen wird und der Abgasstrom seinerseits nicht durch eine unnötige Querschnittsverengung des Abgasrohrs beeinträchtigt wird.

Bevorzugt ist das Fangmedium schräg zu einer Rohrlängsachse des Abgasrohrs angeordnet. Das Fangmedium liegt demzufolge in einer solchen Art und Weise schräg im Abgasrohr, dass sich seine Ebene mit der Rohrlängsachse kreuzt. Bevorzugt ist die Schrägung derart ausgebildet, dass das Fangmedium an einer Fangmediumunterseite von dem Abgasstrom angeströmt wird, während das Reagens auf eine Fangmediumoberseite auftritt und von dort durch den durch das Fangmedium hindurchströmenden Abgasstrom mitgerissen wird.

Besonders bevorzugt ist das Fangmedium derart schräg angeordnet, dass es von der Abgasströmung unterströmt werden kann. Hierdurch wird erreicht, dass der Abgasstrom zumindest abschnittsweise ungehindert das Fangmedium passieren, nämlich unterströmen kann, wodurch sich bei sehr starker Abgasströmung im Bereich des Fangmediums Turbulenzen bilden können, die eine wiederum verbesserte Austragung von Reagens bewirken.

Das Fangmedium ist im Wesentlichen quer zu einer Einströmrichtung des Reagens angeordnet, also dergestalt, dass das in das Abgasrohr einströmende Reagens zwangsläufig auf das Fangmedium auftrifft.

In einer anderen Ausführungsform ist das Fangmedium parallel zu einer Rohrwandung des Abgasrohrs, vorzugsweise unter Zwischenschaltung einer Wärmeisolationsschicht, angeordnet. Das Fangmedium ist hierbei inwandig der Rohrwandung des Abgasrohrs vorgesehen, bevorzugt geschlossen am Innendurchmesser des Abgasrohrs anliegend und mit einer Öffnung für die Zuführstelle/Einspritzstelle versehen, und bevorzugt unter Zwischenschaltung eine Wärmeisolationsschicht, um einen unerwünschten Wärmeaustrag aus dem Gestrick zu verhindern.

In einer weiteren Ausführungsform ist, insbesondere für den Fall nicht hinrechend hoher Abgastemperaturen, wie dies beispielsweise im häufigen Kurzstreckenverkehr vorkommt, vorgesehen, dass dem Fangmedium - zumindest abschnittsweise - eine Heizung zugeordnet ist. Mittels der Heizung ist es möglich, das Fangmedium unabhängig von der Abgastemperatur so weit aufzuheizen, dass eine Rückreaktion beziehungsweise ein Austrag darin befindlichen Reagens oder seiner Folgeprodukte erfolgen kann.

In einer Ausführungsform ist vorgesehen, dass die Heizung eine elektrische Heizmatte ist oder aufweist. Elektrische Heizmatten sind günstig herstellbar und geläufig und können auf vorteilhafte Weise mit vorhandenen Steuer- und Regelsystemen gekoppelt und von diesen angesteuert werden.

Weiter wird ein Verfahren vorgeschlagen zur Zuführung/Einspritzung eines Reagens in ein Abgasrohr einer Abgasanlage eines Kraftfahrzeugs, das eine Zuführstelle/Einspritzstelle aufweist. Hierbei ist vorgesehen, dass die Zuführung/Einspritzung des Reagens in Richtung auf ein der Zuführstelle/Einspritzstelle dem Abgasrohr beabstandet gegenüberliegendes Fangmedium erfolgt. Auf diese Weise wird sichergestellt, dass es nicht zu einem Niederschlag von Reagens auf der Rohrwandung des Abgasrohrs kommt, so dass sich dort keine Ablagerungen/Beläge ausbilden können. Dabei ist das Fangmedium ein Gestrick. Ein Gestrick ist hierbei jede Form von durchlässig ausgebildeter Substanz, wobei bevorzugt faden- oder faserförmige Substanz verwendet wird und wobei zwischen den einzelnen Fasern oder Fäden ein Luftraum verbleibt.

Weitere vorteilhafte Ausführungsformen ergeben sich aus den Unteransprüchen und aus Kombinationen derselben.

### Kurze Beschreibung der Zeichnungen

Die Erfindung wird nachfolgend anhand eines Ausführungsbeispiels näher erläutert, ohne aber hierauf beschränkt zu sein.

Es zeigen
- Figur 1: eine Längsschnittsdarstellung eines Abgasrohrs mit einem der Zuführstelle/Einspritzstelle gegenüberliegenden Fangmedium;
- Figur 2: einen Querschnitt dieser Vorrichtung;
- Figur 3: eine Ausführungsform mit am Abgasrohr parallel liegendem Fangmedium und
- Figur 4: eine Ausführungsform mit ausgekleidetem Abgasrohr.

### Ausführungsform(en) der Erfindung

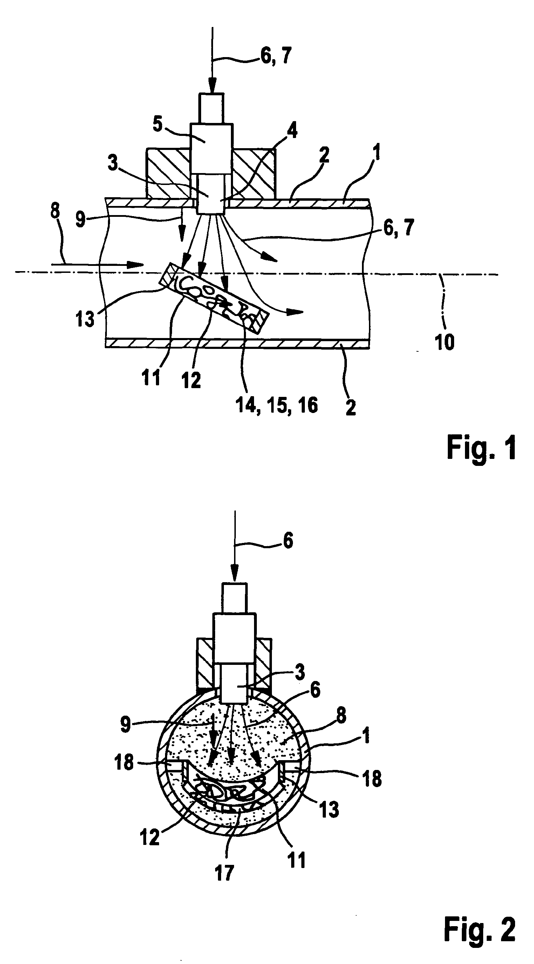

Figur 1 zeigt eine Längsschnittdarstellung eines Abgasrohrs 1 einer nicht näher dargestellten Abgasanlage eines Kraftfahrzeugs. Das Abgasrohr 1 weist, seine Wandung 2 oberseitig durchdringend, eine Zuführstelle/Einspritzstelle 3 auf, mit einer Einspritzdüse 4 und einem Dosierventil 5, zur Einbringung von Reagens 6, beispielsweise Harnstoffwasserlösung 7, in das Abgasrohr 1 zum Zwecke der Abgasbehandlung, insbesondere zur Durchführung einer selektiv-katalytischen Reaktion. Im Abgasrohr 1 wird Abgas 8 im Wesentlichen quer zu einer Einspritzrichtung 9 in Richtung einer Rohrlängsachse 10 geleitet. Im Wesentlichen quer zur Einspritzrichtung 9 ist, beabstandet zur Wandung 2 des Abgasrohrs 1, ein Fangmedium 11 angeordnet, das schräg zur Rohrlängsachse 10 und zur Anströmrichtung des Abgases 8 steht. Das Fangmedium 11 ist aus einem Gestrick 12 gebildet, das in einen Rahmen 13 zu seiner formstabilen Halterung innerhalb des Abgasrohrs 1 eingebracht ist. Reagens 6, das nicht vom Abgas 8 durch dessen Anströmung mitgerissen wird, trifft auf das Fangmedium 11 auf, nicht auf die Wandung 2, die der Zuführstelle/Einspritzstelle 3 diametral gegenüberliegt. Das Fangmedium 11 ist als Gestrick 12 vom Abgas 8 durchströmbar, so dass darin eintretendes Reagens 6 durch das durchströmende Abgas 8 wieder ausgetragen und mitgefördert wird. Das Fangmedium 11 ist von der Wandung 2 allseitig beabstandet, so dass es unterströmt, überströmt und endseitig beströmt werden kann. Es liegt dergestalt in dem Abgasrohr 1 ein, dass ein Auftreffen von Reagens 6 auf die Wandung 2, die der Zuführstelle/Einspritzstelle 3 genau gegenüberliegt, vermieden wird, gleichwohl aber das Abgas 8 in seiner Durchströmung des Abgasrohrs 1 möglichst wenig behindert wird. Das Gestrick 12 ist aus hochtemperaturbeständigem Material 14 ausgebildet, beispielsweise aus Metall 15 oder aus Keramikfaser 16. Auf diese Weise wird erreicht, dass das Gestrick 12 auch bei sehr hohen Temperaturen formstabil bleibt und insbesondere keine eigene (beispielsweise thermische oder chemische) Veränderung erfährt, wohingegen eingebrachtes Reagens 6 durch thermische Reaktion ausgetragen werden kann.
Figur 2 zeigt einen Querschnitt durch das Abgasrohr 1 auf Höhe der Zuführstelle/Einspritzstelle 3 und des Fangmediums 11. Das Fangmedium 11 ist wiederum als Gestrick 12 in einer muldenförmigen Ausbildung 17 ausgebildet, die von dem Rahmen 13 stabilisiert und gehalten wird, wobei an dem Rahmen 13 Rohranschlussstücke 18 zur Fixierung des Rahmens 13 mit dem Gestrick 12 in seiner Position innerhalb des Abgasrohrs 1 angeordnet sind. Die muldenförmige Ausbildung 17 des Fangmediums 11 liegt schräg zur Anströmung durch Abgas 8, das in Längsrichtung durch das Abgasrohr 1 geführt wird, und quer zur Einspritzrichtung 9 des Reagens 6.

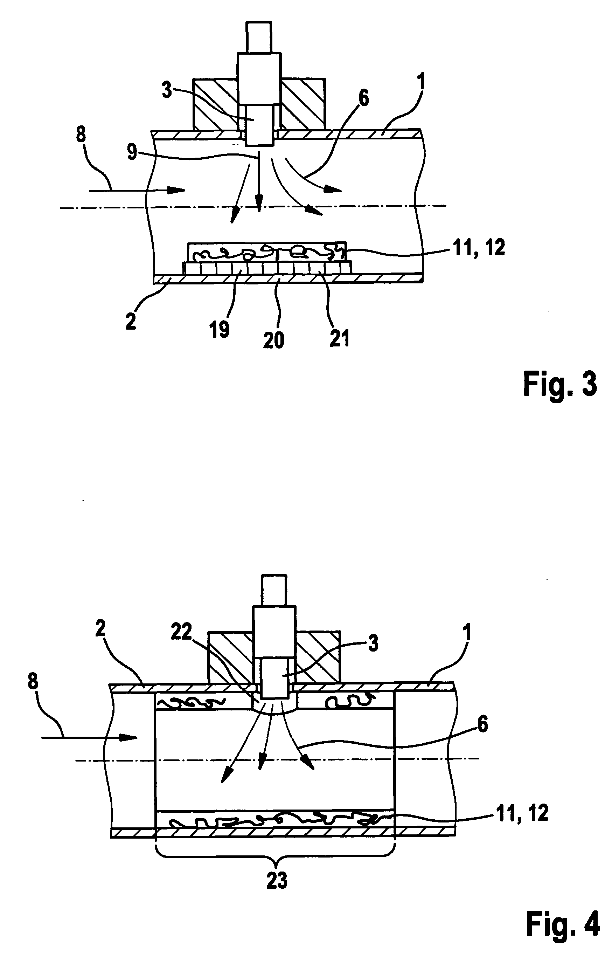

Figur 3 zeigt eine andere Ausführung des Fangmediums 11 innerhalb des Abgasrohrs 1, in der das Fangmedium 11, nämlich als Gestrick 12, auf einer der Zuführstelle/Einspritzstelle 3 gegenüberliegenden Rohrseite 20 direkt an der Wandung 2 des Abgasrohrs 1 angeordnet ist, wobei zwischen dem Gestrick 12 des Fangmediums 11 und der Wandung 2 des Abgasrohrs 1 eine Wärmeisolationsschicht 19 angeordnet ist. Auch hier liegt das Fangmedium 11 quer zur Einspritzrichtung 9 des Reagens 6, jedoch nicht schräg innerhalb des Abgasrohrs 1 und allseitig beabstandet zu der Wandung 2 des Abgasrohrs 1, sondern an der gegenüberliegenden Rohrseite 20 direkt anliegend. Die Wärmeisolationsschicht 19 verhindert hierbei, dass der durch das heiße Abgas 8 erfolgende Wärmeeintrag in das Fangmedium 11, der den Wiederaustrag von Reagens 6 aus dem Gestrick 12 bewirkt, in eben dieser Wirksamkeit durch Wärmeaustrag über die Wandung 12 verringert wird. Anstelle der Wärmeisolationsschicht 19 ist hier auch eine Heizmatte 21 denkbar, insbesondere eine elektrische Heizmatte, die nur im Bedarfsfall über eine geeignete, hier nicht dargestellte Steuerelektronik zugeschaltet wird. Auf diese Weise kann durch hinreichend starke Aufheizung des Gestricks 12 ein vollständiger Wiederaustrag von darin eingebrachtem Reagens 6 oder von dessen Reaktionsprodukten erzielt werden.
Figur 4 zeigt wiederum das Abgasrohr 1 mit einer anderen Ausführungsform des Fangmediums 11, nämlich solcher Art, dass das Fangmedium 11, als Gestrick 12, an der Wandung 2 des Abgasrohrs 1 anliegt und im Bereich der Zuführstelle/Einspritzstelle 3 eine Ausnehmung 22 zum Durchtritt des Reagens 6 aufweist. Das Abgasrohr 1 ist also in einem Abschnitt 23, in dem die Zuführung/Einspritzung von Reagens 6 erfolgt, vollständig an seiner Wandung 2 mit dem Gestrick 12 des Fangmediums 11 ausgegleitet. Lediglich im Bereich der Zuführstelle/Einspritzstelle 3 ist zum Durchtritt des Reagens 6 die Ausnehmung 22 vorgesehen. Insbesondere in Ausführungsformen, in denen ein sehr lichtgewirktes Gestrick 12 Verwendung findet und sehr heiße Abgase eingetragen werden, ist diese Ausführungsform vorteilhaft, da hier ein sicherer Wiederaustrag von eingebrachtem Reagens 6 aus dem Gestrick 12 durch das heiße Abgas bewirkt wird und der in vorstehenden Ausführungsformen gezeigte Rahmen 13 eingespart werden kann; überdies ist in der hier gezeigten Ausführungsform die Einbringung des Fangmediums 11 einfacher und damit deutlich billiger zu bewirken.

## Patentansprüche

1. Vorrichtung zur Zuführung eines Reagens in ein Abgasrohr einer Abgasanlage eines Kraftfahrzeugs, mit einer Zuführstelle/Einspritzstelle, **gekennzeichnet durch** ein der Zuführstelle/Einspritzstelle (3) im Abgasrohr (1) beabstandet gegenüberliegendes Fangmedium (11), wobei das Fangmedium (11) ein Gestrick (12) ist oder ein solches aufweist.

2. Vorrichtung nach Anspruch 1, **dadurch gekennzeichnet, dass** das Fangmedium (11) strömungsdurchlässig ist.

3. Vorrichtung nach einem der vorhergehenden Ansprüche, **dadurch gekennzeichnet, dass** das Gestrick (12) aus hochtemperaturfestem Material (14) gebildet ist oder ein solches aufweist.

4. Vorrichtung nach einem der vorhergehenden Ansprüche, **dadurch gekennzeichnet, dass** das Material ein Metall (15) und/oder eine Kohlefaser und/oder eine Keramikfaser (16) ist oder aufweist.

5. Vorrichtung nach einem der vorhergehenden Ansprüche, **dadurch gekennzeichnet, dass** das Gestrick (12) zumindest abschnittsweise in einem Rahmen (13) angeordnet oder ausgebildet ist.

6. Vorrichtung nach einem der vorhergehenden Ansprüche, **dadurch gekennzeichnet, dass** das Gestrick (12) im Wesentlichen flächig ausgebildet ist.

7. Vorrichtung nach einem der vorhergehenden Ansprüche, **dadurch gekennzeichnet, dass** das Gestrick (12) zumindest abschnittsweise muldenförmig ausgebildet ist.

8. Vorrichtung nach einem der vorhergehenden Ansprüche, **dadurch gekennzeichnet, dass** das Fangmedium (11) schräg zu einer Rohrlängsachse (10) des Abgasrohrs (1) angeordnet ist.

9. Vorrichtung nach einem der vorhergehenden Ansprüche, **dadurch gekennzeichnet, dass** das Fangmedium (11) derart schräg angeordnet ist, dass es von der Abgasströmung unterströmt werden kann.

10. Vorrichtung nach einem der vorhergehenden Ansprüche, **dadurch gekennzeichnet, dass** das Fangmedium (11) im Wesentlichen quer zu einer Einströmrichtung des Reagens (6) angeordnet ist.

11. Vorrichtung nach einem der vorhergehenden Ansprüche, **dadurch gekennzeichnet, dass** das Fangmedium (11) parallel zu einer Rohrwandung des Abgasrohrs (1), vorzugsweise unter Zwischenschaltung einer Wärmeisolationsschicht (19), angeordnet ist.

12. Vorrichtung nach einem der vorhergehenden Ansprüche, **dadurch gekennzeichnet, dass** dem Fangmedium (11) - zumindest abschnittsweise - eine Heizung zugeordnet ist.

13. Vorrichtung nach Anspruch 12, **dadurch gekennzeichnet, dass** die Heizung eine elektrische Heizmatte (21) ist oder aufweist.

14. Verfahren zur Zuführung/Einspritzung eines Reagens in ein Abgasrohr einer Abgasanlage eines Kraftfahrzeugs, das eine Zuführstelle/Einspritzstelle aufweist, **gekennzeichnet durch** die Zuführung/Einspritzung des Reagens in Richtung auf ein der Zuführstelle/Einspritzstelle im Abgasrohr beabstandet gegenüberliegendes Fangmedium, wobei das Fangmedium (11) ein Gestrick (12) ist oder ein solches aufweist.

## Claims

1. Device for supplying a reagent into an exhaust pipe of an exhaust system of a motor vehicle, having a supply point/injection point, **characterized by** a trapping medium (11) which lies opposite to and at a distance from the supply point/injection point (3) in the exhaust pipe (1), wherein the trapping medium (11) is or comprises a knitted structure (12).

2. Device according to Claim 1, **characterized in that** the trapping medium (11) is flow-pervious.

3. Device according to either of the preceding claims, **characterized in that** the knitted structure (12) is formed from or comprises a material (14) which can withstand high temperatures.

4. Device according to one of the preceding claims, **characterized in that** the material is or comprises a metal (15) and/or a carbon fibre and/or a ceramic fibre (16).

5. Device according to one of the preceding claims, **characterized in that** the knitted structure (12) is arranged or formed at least in certain portions in a frame (13).

6. Device according to one of the preceding claims, **characterized in that** the knitted structure (12) has a substantially planar form.

7. Device according to one of the preceding claims, **characterized in that** at least certain portions of the knitted structure (12) have a trough-like form.

8. Device according to one of the preceding claims, **characterized in that** the trapping medium (11) is arranged obliquely with respect to a pipe longitudinal axis (10) of the exhaust pipe (1).

9. Device according to one of the preceding claims, **characterized in that** the trapping medium (11) is arranged in such an oblique manner that the stream of exhaust gas can flow underneath it.

10. Device according to one of the preceding claims, **characterized in that** the trapping medium (11) is arranged substantially transversely to an influx direction of the reagent (6).

11. Device according to one of the preceding claims, **characterized in that** the trapping medium (11) is arranged parallel to a pipe wall of the exhaust pipe (1), preferably with the interposition of a heat insulation layer (19).

12. Device according to one of the preceding claims, **characterized in that** a heater is assigned to at least certain portions of the trapping medium (11).

13. Device according to Claim 12, **characterized in that** the heater is or comprises an electrical heating pad (21).

14. Method for supplying/injecting a reagent into an exhaust pipe of an exhaust system of a motor vehicle, which comprises a supply point/injection point, **characterized by** the supply/injection of the reagent in the direction of a trapping medium which lies opposite to and at a distance from the supply point/injection point in the exhaust pipe, wherein the trapping medium (11) is or comprises a knitted structure (12).

## Revendications

1. Dispositif d'amenée d'un réactif dans le conduit de gaz d'échappement de l'installation de gaz d'échappement d'un véhicule automobile, le dispositif présentant un emplacement d'amenée et/ou d'injection (3),
**caractérisé en ce que**
il présente un moyen de piégeage (11) qui fait face à l'emplacement d'amenée et/ou d'injection (3) et situé à distance de ce dernier, dans le conduit (1) de gaz d'échappement le moyen de piégeage (11) présentant un tricot (12) ou similaire.

2. Dispositif selon la revendication 1, **caractérisé en ce que** le moyen de piégeage (11) est perméable à l'écoulement.

3. Dispositif selon l'une des revendications précédentes, **caractérisé en ce que** le tricot (12) est formé d'un matériau réfractaire (14) ou contient un tel matériau.

4. Dispositif selon l'une des revendications précédentes, **caractérisé en ce que** le matériau est un métal (15), des fibres de carbone et/ou des fibres céramiques (16) ou en contient.

5. Dispositif selon l'une des revendications précédentes, **caractérisé en ce qu'**au moins certaines parties du tricot (12) sont disposées dans un cadre (13) ou forment ce dernier.

6. Dispositif selon l'une des revendications précédentes, **caractérisé en ce que** le tricot (12) est au moins essentiellement plat.

7. Dispositif selon l'une des revendications précédentes, **caractérisé en ce qu'**au moins certaines parties du tricot (12) sont configurées en cuvettes.

8. Dispositif selon l'une des revendications précédentes, **caractérisé en ce que** le moyen de piégeage (11) est disposé obliquement par rapport à l'axe longitudinal (10) du conduit (1) de gaz d'échappement.

9. Dispositif selon l'une des revendications précédentes, **caractérisé en ce que** le moyen de piégeage (11) est disposé obliquement de telle sorte que son côté inférieur puisse être balayé par l'écoulement de gaz d'échappement.

10. Dispositif selon l'une des revendications précédentes, **caractérisé en ce que** le moyen de piégeage (11) est disposé essentiellement transversalement par rapport à la direction d'entrée du réactif (6).

11. Dispositif selon l'une des revendications précédentes, **caractérisé en ce que** le moyen de piégeage (11) est disposé parallèlement à la paroi du conduit (1) de gaz d'échappement, de préférence avec interposition d'une couche (19) d'isolation thermique.

12. Dispositif selon l'une des revendications précédentes, **caractérisé en ce qu'**un moyen de chauffage est associé à au moins certaines parties du moyen de piégeage (11).

13. Dispositif selon la revendication 12, **caractérisé en ce que** le moyen de chauffage est un tapis chauffant (21) ou en contient un.

14. Procédé d'amenée et/ou d'injection d'un réactif dans le conduit de gaz d'échappement de l'installation de gaz d'échappement d'un véhicule automobile, le dispositif présentant un emplacement d'amenée et/ou d'injection,
**caractérisé en ce que**
le réactif est amené et/ou injecté en direction d'un moyen de piégeage situé face à un emplacement d'amenée et/ou d'injection et à distance de ce dernier dans le conduit de gaz d'échappement, le moyen de piégeage (11) présentant un tricot (12) ou similaire.
